# EUROPÄISCHE PATENTSCHRIFT

(11) **EP 1 816 318 B1**
(45) Veröffentlichungstag und Bekanntmachung des Hinweises auf die Patenterteilung: **26.01.2011**
(21) Anmeldenummer: 06021289.1
(22) Anmeldetag: 11.10.2006
(51) Int. Cl.: F01K 23/06, F02G 5/04

(54) **Kraft-Wärme-Kopplungsanlage mit Verbrennungsmotor und organischem Rankine Prozess (ORC)**
Cogeneration Plant with an Internal Combustion Engine and an Organic Rankine Cycle (ORC)
Installation de cogénération avec une combinaison d'un moteur à combustion interne et d'un cycle de Rankine utilisant un fluide organique (ORC)

(30) Priorität: 12.10.2005 DE 102005048795
(43) Veröffentlichungstag der Anmeldung: 08.08.2007
(73) Patentinhaber: Robert Bosch GmbH, 70469 Stuttgart (DE)
(72) Erfinder: Köhler, Harald, 35463 Fernwald (DE); Lorenz, Mathias, 35630 Ehringshausen (DE)

(56) Entgegenhaltungen:
- EP-A- 0 015 208
- EP-A1- 1 443 183
- WO-A-99/40379
- DE-A1- 19 541 521
- GB-A- 2 063 370
- US-A- 4 901 531
- US-A- 5 000 003
- US-A1- 2004 255 587

## Beschreibung

Die Erfindung betrifft eine Kraft-Wärme-Kopplungsanlage nach dem Oberbegriff des Patentanspruches 1.

Anlagen zur Kraft-Wärme-Kopplung, sogenannte Blockheizkraftwerke (BHKW), sind allgemein bekannt. Es handelt sich dabei um dezentrale, meistens mit Verbrennungskraftmaschinen angetriebene Stromerzeugungsanlagen mit gleichzeitiger Abwärmenutzung. Die bei der Verbrennung über die Kühlmedien ausgetragene Wärme wird dabei möglichst vollständig zur Beheizung geeigneter Objekte genutzt.

Weiterhin ist die Anwendung eines ORC (Organic-Rankine-Cycle), also eines organischen Kreisprozesses nach Rankine bekannt. Es handelt sich dabei um einen Dampfprozess, bei dem an Stelle von Wasser organische Medien verdampft werden. Eine Speisepumpe saugt das Prozessmedium an und fördert es durch einen einzigen Wärmeübertrager, in dem die vollständige Erhitzung erfolgt, in einen Verdampfer bzw. Überhitzer. Der entstandene Dampf treibt eine Dampfturbine, einen Kolben-oder Schraubenmotor an, welcher wiederum mit einem elektrischen Generator gekoppelt ist. Nach der Arbeitsmaschine gelangt das Prozessmedium in einen Verflüssiger und wird dort rückgekühlt. Da Wasser unter atmosphärischen Bedingungen bei 100 °C verdampft, kann Wärme auf einem niedrigen Temperaturniveau, wie zum Beispiel Industrieabwärme oder Erdwärme, oftmals nicht zur Stromerzeugung genutzt werden. Verwendet man allerdings organische Medien mit niedrigeren Siedetemperaturen, so lässt sich Niedertemperaturdampf erzeugen.

Vorteilhaft in der Anwendung sind ORC-Anlagen auch bei der Verwertung von Biomasse im Zusammenhang mit Kraft-Wärme-Kopplung, insbesondere bei relativ kleinen Leistungen, also wenn die herkömmliche Biomasse-Feuerungstechnik relativ teuer erscheint. Biomasseanlagen besitzen häufig einen Fermenter zur Biogaserzeugung, welcher in der Regel beheizt werden muss.

Gattungsgemäße Anlagen zur Kraft-Wärme-Kopplung bestehen aus einem mit einem nachgeschalteten ORC kombinierten BHKW. Aus der DE 195 41 521 A1 geht eine Anlage zur Steigerung des elektrischen Wirkungsgrades bei der Verstromung von Sondergasenmittels Verbrennungsmotoren hervor, bei der die Abwärme des Motors in einer nachgeschalteten Energieumwandlungsanlage zur weiteren Stromerzeugung genutzt wird. Allerdings ist dabei nur die Hochtemperaturwärme aus dem Kühlwasserkreislauf sowie aus dem Abgaswärmetauscher des Motors zur Verwertung vorgesehen.
Weiterhin ist aus der US 4 901 531 ein in einen Rankine-Prozess integriertes Diesel-Aggregat bekannt, wobei ein Zylinder der Expansion gemäß Rankine dient und die anderen als Dieselmotor arbeiten. Aus der US 4 334 409 geht eine nach dem Rankine-Prozess arbeitende Anordnung hervor, bei der das Arbeitsfluid mit einem Wärmetauscher vorgeheizt wird, über den die Luft aus dem Auslass eines Kompressors einer Maschine mit innerer Verbrennung geführt ist.
Insbesondere bei Kraft-Wärme-Kopplungsanlagen mit nachgeschaltetem ORC als Abwärmekraftwerk haben sich Maschinen durchgesetzt, die auf Motoren mit einem Abgasturbolader zur Aufladung basieren. Man kommt damit der Forderung nach Maschinen mit sehr hohen elektrischen Wirkungsgraden nach, die sich nur mit Turboaufladung und Rückkühlung des durch die Verdichtung erhitzten Brenngasgemisches erreichen lassen. Generell ist eine Kühlung des Brenngasgemisches erforderlich, weil ansonsten die Füllung der Zylinder relativ schlecht wäre. Mit der Kühlung wird die Dichte des angesaugten Gemisches größer und es verbessert sich der Füllungsgrad. Damit steigen die Leistungsausbeute und der mechanische Wirkungsgrad des Motors.
Die Motorenhersteller schreiben für die Gemischkühlung eine Kühlwassereintrittstemperatur von nur etwa 40 bis 50 °C vor, damit das Gemisch genügend abgekühlt werden kann. Da dieses Temperaturniveau relativ niedrig ist, wird die dem Brenngasgemisch entzogene Wärme bei den bisher bekannten Kraft-Wärme-Kopplungsanlagen an die Umgebung abgegeben, beispielsweise mit einem Tischkühler.
Aus der WO 99/40379 A ist ein Verfahren der Wärmetransformation zur Wandlung der Niedertemperatur-Abwärme aus kühlkreisläufen von Biockheizkraftwerken mit Verbrennungsmotoren bekannt. Durch Anwendung des Prinzips der Hochtemperatur-Wärmepumpe wird dabei Wärme verwertet und es werden Motorkühlkreisläufe rückgekühlt. Dabei kommen mehrere in Reihe geschaltete Wärmetauscher im ORC zum Einsatz, welche Wärme an verschiedenen Stellen an das Prozessmedium übertragen.
Die US 5 000 003 A zeigt eine flüssigkeitsgekühlte Verbrennungskraftmaschine, welche mit einem ORC-Kreislauf in Verbindung steht. Dabei strömt das Abgas im Gegenstrom zum Prozessmedium im ORC-Kreislauf und heizt dieses auf. Zusätzlich wird in den Verdampfer im Bereich der flüssigen Phase die Wärme aus dem Kühlkreislauf der Verbrennungskraftmaschine übertragen. Dieser Wärmeträgerkreislauf ist thermostatisch geregelt.

Der Erfindung liegt daher die Aufgabe zu Grunde, eine Kraft-Wärme-Kopplungsanlage, welche insbesondere aus einem mit einem nachgeschalteten ORC kombinierten Blockheizkraftwerk mit einer Verbrennungskraftmaschine mit Turbolader und Gemischkühlung für das Brenngasgemisch besteht, zu optimieren.

Erfindungsgemäß wird dies mit den Merkmalen des Patentanspruches 1 gelöst. Vorteilhafte Weiterbildungen sind den Unteransprüchen zu entnehmen.
Die Kraft-Wärme-Kopplungsanlage ist dadurch gekennzeichnet, dass das Prozessmedium im ORC über zwei in Reihe der Speisepumpe nachgeschaltete Wärmetauscher erwärmt wird, wobei der erste Wärmetauscher nach der Speisepumpe als erste Stufe zur Einkopplung von Niedertemperaturwärme und der nachfolgende als zweite Stufe zur Einkopplung von Hochtemperaturwärme vorgesehen ist.
Daher ist die Gemischkühlung der Verbrennungskraftmaschine, in der Regel ein Wärmetauscher, über einen Kreislauf mit dem ersten Wärmetauscher nach der Speisepumpe verbunden. Die Wärme aus der Kühlung des von der Verbrennungskraftmaschine angesaugten Brenngasgemisches dient somit zur Vorwärmung des Prozessmediums im ORC und wird als Niedertemperaturwärme im ersten Wärmetauscher nach der Speisepumpe eingekoppelt.
Ein zweiter Heizkreislauf, welcher Wärme aus Motorkühlwasser und Abgas der Verbrennungskraftmaschine bezieht, ist mit dem zweiten Wärmetauscher nach der Speisepumpe verbunden. Somit wird die Wärme aus dem Kühlkreislauf und dem Abgas der Verbrennungskraftmaschine zur Überhitzung, Verdampfung und teilweise Vorwärmung des Prozessmediums im ORC eingesetzt und als Hochtemperaturwärme im zweiten Wärmetauscher nach der Speisepumpe eingekoppelt.

Die beiden Wärmetauscher sind so ausgelegt, dass etwa die Hälfte der thermischen Energie zur Vorwärmung des Prozessmediums über den ersten Wärmetauscher nach der Speisepumpe übertragen wird. Vorzugsweise kommt im nachgeschalteten ORC ein Dampf-Schraubenmotor zum Antrieb eines Generators zum Einsatz. Die nach dem zweiten Wärmetauscher nach der Speise- pumpe im zweiten Heizkreislauf verbliebene Restwärme kann für externe Heizzwecke, zum Beispiel für die Beheizung eines Fermenters, genutzt werden. Diese Art der Fermenterbeheizung hat den Vorteil, dass das Heizwasser auf einem höheren Temperaturniveau vorliegt, und der Wärmetauscher im Fermenter daher kleiner und kostengünstiger ausgeführt werden kann.
Die Zuschaltung, Abschaltung und/oder Regelung des ORC ist nach mindestens einem einstellbaren Sollwert für die Temperatur im Kreislauf für die Gemischkühlung der Verbrennungskraftmaschine möglich. Dabei wird eine aktuelle Temperatur im Kreislauf für die Gemischkühlung der Verbrennungskraftmaschine am ersten Wärmetauscher nach der Speisepumpe erfasst und mit dem mindestens einen einstellbaren Sollwert verglichen. Alternativ oder ergänzend dazu kann die Zuschaltung, Abschaltung und/oder Regelung des ORC auch nach mindestens einem einstellbaren Sollwert für den Verdampferdruck im ORC erfolgen. Dann wird ein aktueller Druckwert am Verdampfer im ORC erfasst und mit dem mindestens einen einstellbaren Sollwert für den Verdampferdruck im ORC verglichen.

Mit der Erfindung werden Aufbau und Betriebsverhalten einer Kraft-Wärme-Kopplungsanlage, welche insbesondere aus einem mit einem nachgeschalteten ORC kombinierten Blockheizkraftwerk mit einer Verbrennungskraftmaschine mit Turbolader und

Gemischkühlung für das Brenngasgemisch besteht, optimiert. Einerseits ist ein sicherer, effektiver Motorbetrieb und eine ausreichende Kühlung des Brenngasgemisches am BHKW gewährleistet und andererseits erhöht sich der Gesamtwirkungsgrad einer gattungsgemäßen Anlage, weil selbst die auf einem relativ niedrigen Temperaturniveau von etwa 40 bis 50 °C vorliegende, dem Brenngasgemisch entzogene Wärme nun nicht mehr ungenutzt an die Umgebung abgegeben wird. Sie kann deshalb gut in den ORC zur Vorwärmung eingekoppelt werden, weil das Arbeitsmedium des ORC nach dem Austritt aus dem Verflüssiger mit einer Temperatur um 20 °C vorliegt. Wichtig dabei ist, dass die Erwärmung nach der Verdichtung auf den eigentlichen Verdampfungsdruck erfolgt. Ansonsten käme es zu einer unkontrollierten Verdampfung. Dies würde die Speisepumpe schädigen und den Prozess zum Erliegen bringen.

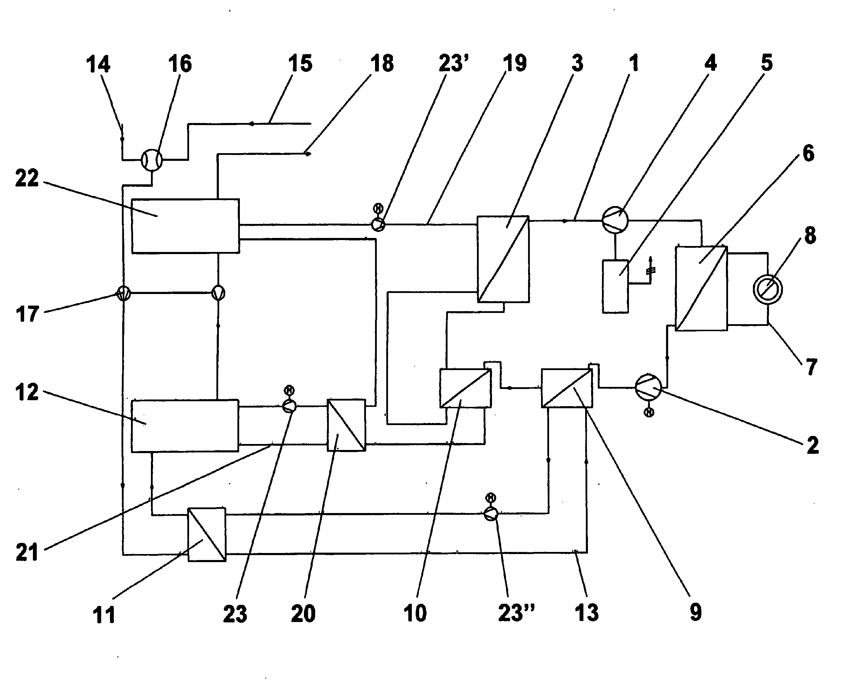

Die Zeichnung stellt ein Ausführungsbeispiel der Erfindung dar und zeigt in einer einzigen Figur den schematischen Aufbau einer Kraft-Wärme-Kopplungsanlage, bestehend aus einem mit einem nachgeschalteten ORC kombinierten Blockheizkraftwerk.

Die für den ORC betriebswichtigen Komponenten sind ein ORC-Kreislauf 1, eine Speisepumpe 2, ein Verdampfer 3, ein Dampf-Schraubenmotor 4 zum Antrieb eines Generators 5, ein Verflüssiger 6 mit einem Kreislauf 7 für die Rückkühlung über einen Wärmeverbraucher 8 sowie die Wärmetauscher 9, 10 zur Vorwärmung des Prozessmediums im ORC-Kreislauf 1.

Die beiden Wärmetauscher 9, 10 sind in Reihe der Speisepumpe 2 nachgeschaltet. Dabei dient der erste Wärmetauscher 9 nach der Speisepumpe 2 als erste Stufe zur Einkopplung von Niedertemperaturwärme und der nachfolgende Wärmetauscher 10 als zweite Stufe zur Einkopplung von Hochtemperaturwärme. Der Gemischkühler 11 der Verbrennungskraftmaschine 12 ist über einen Kreislauf 13 mit dem ersten Wärmetauscher 9 verbunden, so dass die dem Brenngasgemisch entzogene Wärme zur Vorwärmung des Prozessmediums im ORC dient. Das Brenngasgemisch wird in einem an eine Gaszufuhr 14 und eine Luftzufuhr 15 angeschlossenen Gas-/Luft-Mischer 16 aufbereitet und erwärmt sich bei der nachfolgenden Verdichtung im Turbolader 17, der auf der anderen Seite mit der Abgasleitung 18 in Verbindung steht.

Ein zweiter Heizkreislauf 19 bezieht Wärme zunächst über einen Wärmetauscher 20 aus dem Kühlkreislauf 21 und nachfolgend über einen Abgaswärmetauscher 22 in der Abgasleitung 18. Dieser zweite Heizkreislauf 19 ist mit seinem Vorlaufbereich mit dem Verdampfer 3 des ORC verbunden, weil das Temperaturniveau im Bereich von etwa 80 bis 100 °C liegt. Danach mündet der zweite Heizkreislauf 19 rücklaufseitig in den zweiten Wärmetauscher 10 und gibt dort noch vorhandene Restwärme an den ORC ab.

Mit dem Starten des Blockheizkraftwerkes gehen auch alle drei Kreislaufpumpen 23, 23', 23" in Betrieb. Für die Zuschaltung, Abschaltung und/oder Regelung des ORC nach einer aktuellen Temperatur im Kreislauf 13 ist am ersten Wärmetauscher 9 eine nicht dargestellte Temperaturmesseinrichtung vorgesehen. Alternativ oder ergänzend dazu kann eine Druckmesseinrichtung am Verdampfer 3 angebracht werden.

## Patentansprüche

1. Kraft-Wärme-Kopplungsanlage, bestehend aus einem mit einem nachgeschalteten ORC (Organic-Rankine-Cycle) kombinierten Blockheizkraftwerk (BHKW) mit einer Verbrennungskraftmaschine (12) mit Turbolader (17) und Gemischkühlung für das Brenngasgemisch vor dem Eintritt in die Zylinder, einem Wärmetauscher (20) im Kühlkreislauf (21) sowie einem Abgaswärmetauscher (22), dessen Vorlaufleitung mit dem Verdampfer (3) des ORC in Verbindung steht und diesen beheizt, wobei das Prozessmedium im ORC über zwei in Reihe der Speisepumpe (2) nachgeschaltete Wärmetauscher (9, 10) erwärmt wird, und dabei der erste Wärmetauscher (9) nach der Speisepumpe (2) als erste Stufe zur Einkopplung von Niedertemperaturwärme und der nachfolgende Wärmetauscher (10) als zweite Stufe zur Einkopplung von Hochtemperaturwärme vorgesehen ist, **dadurch gekennzeichnet, dass** die Wärmetauscher (9,10) in der Vorlaufleitung des Dampferzeugers (3) angeordnet sind, dass die Gemischkühlung der Verbrennungs- kraftmaschine (12) über einen Kreislauf (13) mit dem ersten Wärmetauscher (9) nach der Speisepumpe (2) verbunden ist, wobei die Wärme aus der Kühlung des von der Verbrennungskraftmaschine (12) angesaugten Brenngasgemisches zur Vorwärmung des Prozessmediums im ORC dient und als Niedertemperaturwärme im ersten Wärmetauscher (9) eingekoppelt wird, und dass ein zweiter Heizkreislauf (19) Wärme aus Motorkühlwasser und Abgas der Verbrennungskraftmaschine (12) bezieht und mit dem zweiten Wärmetauscher (10) nach der Speisepumpe (2) verbunden ist, wobei die Wärme aus dem Kühlkreislauf (21) und dem Abgas der Verbrennungskraftmaschine (12) zur Überhitzung und Verdampfung des Prozessmediums im ORC dient und als Hochtemperaturwärme im zweiten Wärmetauscher (10) nach der Speisepumpe (2) eingekoppelt wird.

2. Kraft-Wärme-Kopplungsanlage nach Anspruch 1,
**dadurch gekennzeichnet, dass** im nachgeschalteten ORC ein Dampf-Schraubenmotor (4) zum Antrieb eines Generators (5) dient.

3. Kraft-Wärme-Kopplungsanlage nach einem der Ansprüche 1 oder 2,
**dadurch gekennzeichnet, dass** die nach dem zweiten Wärmetauscher (10) nach der Speisepumpe (2) im zweiten Heizkreiskreislauf (19) verbliebene Restwärme für externe Heizzwecke genutzt wird.

4. Kraft-Wärme-Kopplungsanlage nach einem der Ansprüche 1 bis 3,
**dadurch gekennzeichnet, dass** die Zuschaltung, Abschaltung und/oder Regelung des ORC nach mindestens einem einstellbaren Sollwert für die Temperatur im Kreislauf (13) für die Gemischkühlung der Verbrennungskraftmaschine (12) erfolgt.

5. Kraft-Wärme-Kopplungsanlage nach einem der Ansprüche 1 bis 4,
**dadurch gekennzeichnet, dass** für die Zuschaltung, Abschaltung und/oder Regelung des ORC eine aktuelle Temperatur im Kreislauf (13) für die Gemischkühlung der Verbrennungskraftmaschine (12) am ersten Wärmetauscher (9) nach der Speisepumpe (2) erfasst und mit mindestens einem einstellbaren Sollwert verglichen wird.

6. Kraft-Wärme-Kopplungsanlage nach einem der Ansprüche 1 bis 5,
**dadurch gekennzeichnet, dass** die Zuschaltung, Abschaltung und/oder Regelung des ORC nach mindestens einem einstellbaren Sollwert für den Verdampferdruck im ORC erfolgt.

7. Kraft-Wärme-Kopplungsanlage nach einem der Ansprüche 1 bis 6,
**dadurch gekennzeichnet, dass** für die Zuschaltung, Abschaltung und/oder Regelung des ORC ein aktueller Druckwert am Verdampfer (3) im ORC erfasst und mit mindestens einem einstellbaren Sollwert für den Verdampferdruck im ORC verglichen wird.

## Claims

1. A combined heat and power plant consisting of a block heating and generating plant (CHP) combined with an ORC (Organic Rankine Cycle) connected downstream with a combustion engine (12) with turbocharger (17) and mixture cooling for the fuel gas mixture prior to entering the cylinders, a heat exchanger (20) in the cooling circuit (21) and a waste gas heat exchanger (22) whose advance line is connected to the evaporator (3) of the ORC heating said evaporator, wherein the process medium in the ORC is heated via two heat exchangers (9, 10) connected in series downstream of the feed pump (2), and the first heat exchanger (9) after the feed pump (2) is provided as first stage for coupling-in low-temperature heat and the following heat exchanger (10) as second stage for the coupling-in of high-temperature heat, **characterized in that** the heat exchangers (9, 10) are arranged in the advance line of the steam generator (3), **in that** the mixture cooling of the combustion engine (12) is connected to the first heat exchanger (9) after the feed pump (2) via a circuit (13), wherein the heat from the cooling of the fuel gas mixture sucked in by the combustion engine (12) serves for preheating the process medium in the ORC and as low-temperature heat is coupled into the first heat exchanger (9), and **in that** a second heating circuit (19) draws heat from the engine cooling water and waste gas of the combustion engine (12) and is connected to the second heat exchanger (10) after the feed pump (2), wherein the heat from the cooling circuit (21) and the waste gas of the combustion engine (12) serves for superheating and evaporating the process medium in the ORC and is coupled into the second heat exchanger (10) after the feed pump (2) as high-temperature heat.

2. The combined heat and power plant according to Claim 1, **characterized in that** in the ORC connected downstream a vapour screw-type motor (4) serves for driving a generator (5).

3. The combined heat and power plant according to any one of the Claims 1 or 2, **characterized in that** the residual heat remaining in the second heating circuit (19) after the second heat exchanger (10) after the feed pump (2) is utilised for external heating purposes.

4. The combined heat and power plant according to any one of the Claims 1 to 3, **characterized in that** switching-on, switching-off and/or regulation of the ORC takes place according to at least one adjustable set value for the temperature in the circuit (13) for the mixture cooling of the combustion engine (12).

5. The combined heat and power plant according to any one of the Claims 1 to 4, **characterized in that** for switching-on, switching-off and/or regulation of the ORC a current temperature in the circuit (13) for the mixture cooling of the combustion engine (12) is sensed on the first heat exchanger (9) after the feed pump (2) and compared with at least one adjustable set value.

6. The combined heat and power plant according to any one of the Claims 1 to 5, **characterized in that** the switching-on, switching-off and/or regulation of the ORC takes place according to at least one adjustable set value for the evaporator pressure in the ORC.

7. The combined heat and power plant according to any one of the Claims 1 to 6, **characterized in that** for the switching-on, switching-off and/or regulation of the ORC a current pressure value on the evaporator (3) in the ORC is sensed and compared with at least one adjustable set value for the evaporator pressure in the ORC.

## Revendications

1. Installation de couplage force-chaleur, comprenant une centrale thermique en montage bloc avec chauffage à distance (BHKW) combinée avec un ORC (Organic-Rankine-Cycle) monté en aval avec un moteur à combustion interne (12) avec turbocompresseur (17) et refroidissement de mélange pour le mélange de gaz combustible avant l'entre dans le cylindre, un échangeur de chaleur (20) dans le circuit de refroidissement (21) et un échangeur de chaleur à gaz d'échappement (22), dont la conduite aller est en liaison avec l'évaporateur (3) du ORC et chauffe celui-ci, le milieu de processus étant réchauffé dans le ORC au moyen de deux échangeurs de chaleur (9, 10) montés en aval en série avec la pompe d'alimentation (2), et le premier échangeur de chaleur (9) étant prévu après la pompe d'alimentation (2) comme premier niveau pour l'injection de chaleur à basse température et l'échangeur de chaleur (10) suivant étant prévu comme second niveau pour l'injection de chaleur à haute température, **caractérisé en ce que** les échangeurs de chaleur (9, 10) sont disposés dans la conduite aller du générateur de vapeur (3), **en ce que** le refroidissement du mélange du moteur à combustion interne (12) est relié par un circuit (13) au premier échangeur de chaleur (9) après la pompe d'alimentation (2), la chaleur provenant du refroidissement du mélange de gaz combustible aspiré par le moteur à combustion interne (12) servant au préchauffage du milieu de processus dans le ORC et étant injecté sous forme de chaleur à basse température dans le premier échangeur de chaleur (9), et **en ce qu'**un second circuit de chauffage (19) fait venir de la chaleur de l'eau de refroidissement du moteur et des gaz d'échappement du moteur à combustion interne (12) et est relié au second échangeur de chaleur (10) après la pompe d'alimentation (2), la chaleur provenant du circuit de refroidissement (21) et des gaz d'échappement du moteur à combustion interne (12) servant à la surchauffe et à l'évaporation du milieu de processus dans l'ORC et étant injecté sous forme de chaleur à haute température dans le second échangeur de chaleur (10) après la pompe d'alimentation (2).

2. Installation de couplage force-chaleur selon la revendication 1, **caractérisé en ce que**, dans le ORC monté en aval, un moteur à vis à vapeur (4) sert à l'entraînement d'un générateur (5).

3. Installation de couplage force-chaleur selon l'une quelconque des revendications 1 ou 2, **caractérisé en ce que** la chaleur résiduelle restée après le second échangeur de chaleur (10) après la pompe d'alimentation (2) dans le second circuit de chauffage (19) est utilisée pour des besoins de chauffage externes.

4. Installation de couplage force-chaleur selon l'une quelconque des revendications 1 à 3, **caractérisé en ce que** la connexion et la déconnexion et/ou le réglage du ORC s'effectuent selon au moins une valeur de consigne réglable pour la température dans le circuit (13) pour le refroidissement du mélange du moteur à combustion interne (12).

5. Installation de couplage force-chaleur selon l'une quelconque des revendications 1 à 4, **caractérisé en ce que**, pour la connexion, la déconnexion et/ou le réglage du ORC, une température actuelle dans le circuit (13) pour le refroidissement du mélange du moteur à combustion interne (12) est enregistrée sur le premier échangeur de chaleur (9) après la pompe d'alimentation (2) et est comparée avec au moins une valeur de consigne réglable.

6. Installation de couplage force-chaleur selon l'une quelconque des revendications 1 à 5, **caractérisé en ce que** la connexion, la déconnexion et/ou le réglage du ORC s'effectuent selon au moins une valeur de consigne réglable pour la pression d'évaporateur dans le ORC.

7. Installation de couplage force-chaleur selon l'une quelconque des revendications 1 à 6, **caractérisé en ce que**, pour la connexion, la déconnexion et/ou le réglage du ORC, une valeur de pression actuelle est enregistrée sur l'évaporateur (3) dans le ORC et est comparée avec au moins une valeur de consigne réglable pour la pression d'évaporateur dans le ORC.
